# FASCICULE DE BREVET EUROPEEN

(11) **EP 1 731 066 B1**
(45) Date de publication et mention de la délivrance du brevet: **05.11.2008**
(21) Numéro de dépôt: 06290866.0
(22) Date de dépôt: 24.05.2006
(51) Int. Cl.: A47J 31/44, A47J 31/057

(54) **Porte-filtre pour mouture de café et machine a café comprenant un tel porte-filtre**
Filterhalter für Kaffeemehl und Kaffeemaschine mit solchem Filterhalter
Filter holder for coffee powder and coffee machine with such a filter holder

(30) Priorité: 10.06.2005 FR 0505934
(43) Date de publication de la demande: 13.12.2006
(73) Titulaire: SEB SA, 69130 Ecully (FR)
(72) Inventeur: Rolland, Jackie, 14230 Saint Martin de Fontenay (FR)
(74) Mandataire: Kiehl, Hubert

(56) Documents cités:
- EP-A- 0 111 969
- EP-A- 0 315 037
- DE-C- 241 350
- US-A- 3 361 052
- US-A- 4 986 172

## Description

La présente invention se rapporte à une machine à café comportant un générateur d'eau chaude sous basse pression, de l'ordre de deux bars, et une chambre d'infusion comportant un porte-filtre destiné à recevoir une dose de mouture à infuser, ledit porte-filtre comprenant une coupelle présentant un fond muni d'au moins un orifice de sortie, une paroi annulaire s'étendant depuis le fond jusqu'à un pourtour supérieur définissant une ouverture destinée à être montée sur une sortie d'eau chaude de la machine, et une grille perforée s'étendant entre la paroi annulaire de la coupelle et présentant une face supérieure destinée à supporter la mouture sur une hauteur déterminée de remplissage en mouture non tassée, ladite coupelle du porte-filtre comportant des moyens pour entraver le tassage de la mouture par l'utilisateur avant la préparation d'une infusion.

Des machines à café utilisant de tels porte-filtre sont bien connues, comme par exemple les cafetières goutte à goutte, comme décrit dans le document US-A-4 986 172, ou encore les machines à café du type espresso dans lesquelles le porte-filtre est monté par une liaison de type baïonnette sur une sortie d'eau chaude sous une pression de l'ordre de quinze bars. Il peut également s'agir des machines à café qui délivrent de l'eau chaude sous basse presse, c'est-à-dire de l'ordre de deux bars, et qui comportent une chambre d'infusion avec une partie mobile qui est refermée sur le porte filtre.

Avant de mettre en place le porte-filtre dans la machine à café, l'utilisateur remplit celui-ci de mouture de café à l'aide d'une cuillère doseuse standard appelée dosette, jusqu'à un niveau déterminé qui correspond au volume de mouture nécessaire pour préparer un ou plusieurs cafés. En fin de remplissage, l'utilisateur a généralement l'habitude de tasser la mouture de café dans le porte-filtre à l'aide de la dosette, puis met en place le porte-filtre sur la sortie d'eau chaude de la machine.

Dans le cas des machines à café du type espresso, celles-ci comprennent généralement une grille perforée, montée dans la tête de distribution d'eau chaude, qui provoque un tassement de la mouture dès la mise en place du porte-filtre. Par conséquent, le fait que l'utilisateur tasse préalablement la mouture dans le porte-filtre n'a pas d'effet négatif notable avec ces machines espresso délivrant de l'eau sous une pression de l'ordre de 15 bars.

Avec les machines à café à basse pression, de l'ordre de deux bars, les moyens d'entrave ne donnent pas la possibilité pour l'utilisateur de tasser la mouture en fin de remplissage du porte-filtre, de sorte que l'utilisateur met nécessairement en place un porte-filtre contenant une dose de mouture non tassée sur la sortie d'eau chaude sous basse pression de la machine à café, permettant dès lors d'obtenir une parfaite extraction du café.

La présente invention a pour but de réaliser une machine à café délivrant de l'eau sous faible pression, qui garantisse une parfaite extraction du café à l'aide de moyens simples.

A cet effet, la présente invention a pour objet une machine à café du type précité, caractérisée en ce que les moyens d'entrave comportent au moins un organe saillant s'étendant depuis une base coplanaire avec la face supérieure de la grille jusqu'à un sommet situé à une hauteur au moins approximativement égale à la hauteur déterminée de remplissage ;

Dans des modes de réalisation préférés de l'invention, on a recours en outre, à l'une et/ou à l'autre des dispositions suivantes :
- l'organe saillant est fixé au centre de la grille perforée ;
- le sommet de l'organe saillant est situé à une hauteur sensiblement égale à la hauteur déterminée de remplissage ; ainsi, le sommet forme un repère supplémentaire de cette hauteur de remplissage ;
- l'organe saillant présente une paroi latérale annulaire s'étendant de la base au sommet, ladite paroi latérale de l'organe saillant présentant une section transversale qui décroît d'une manière continue depuis la base jusqu'au sommet ;
- la distance horizontale entre la paroi latérale de l'organe saillant et la paroi annulaire de la coupelle est inférieure à la largeur d'une cuillère doseuse standard sur la majeure partie de la hauteur de l'organe saillant ;
- l'organe saillant présente globalement la forme d'un dôme, constituant ainsi un organe d'une réalisation simple et peu coûteuse ;
- la base de l'organe saillant présente une empreinte adaptée à coopérer avec un moyen de fixation, ledit moyen de fixation étant monté à travers la grille perforée de manière à maintenir celle-ci dans la coupelle à l'aide de l'organe saillant ; ainsi, le moyen de fixation n'est pas visible ; et
- un couvercle est monté articulé sur la coupelle entre une position ouverte dans laquelle il dégage l'ouverture de la coupelle pour le remplissage de la mouture et une position fermée pour laquelle il est agencé dans l'ouverture de la coupelle, ledit couvercle présentant une face inférieure perforée et une face supérieure munie d'orifices communiquant avec ladite face inférieure perforée par des canaux, ladite face inférieure du couvercle en position fermée s'étendant selon un plan passant par la hauteur déterminée de remplissage.

D'autres caractéristiques et avantages de l'invention apparaîtront au cours de la description qui va suivre, donnée à titre d'exemple non limitatif, en référence aux dessins annexés dans lesquels :
- la figure 1 est une vue éclatée d'un porte-filtre selon l'invention ;
- la figure 2 est une vue en perspective à l'état assemblé du porte-filtre de la figure 1, qui comporte un couvercle en position ouverte ; et
- la figure 3 est une vue en coupe selon la ligne III-III de la figure 2, dans laquelle le couvercle est en position fermée et le porte-filtre est placé dans une machine à café partiellement représentée.

Sur les différentes figures, on a conservé des références identiques pour désigner des éléments identiques ou similaires.

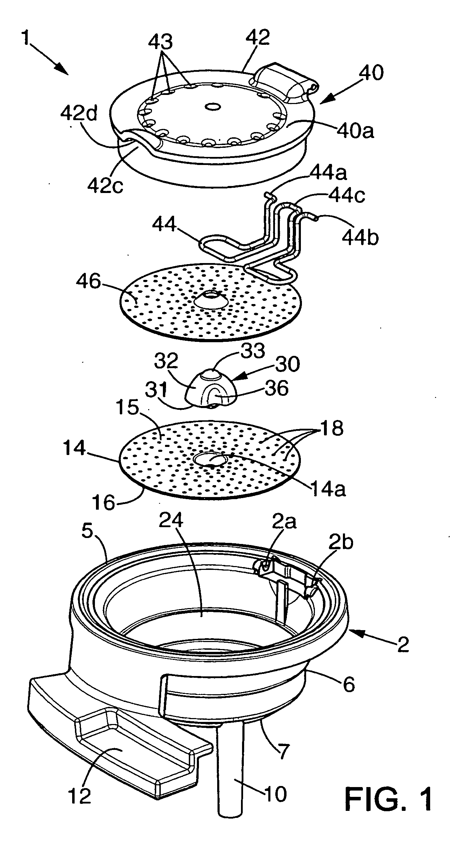

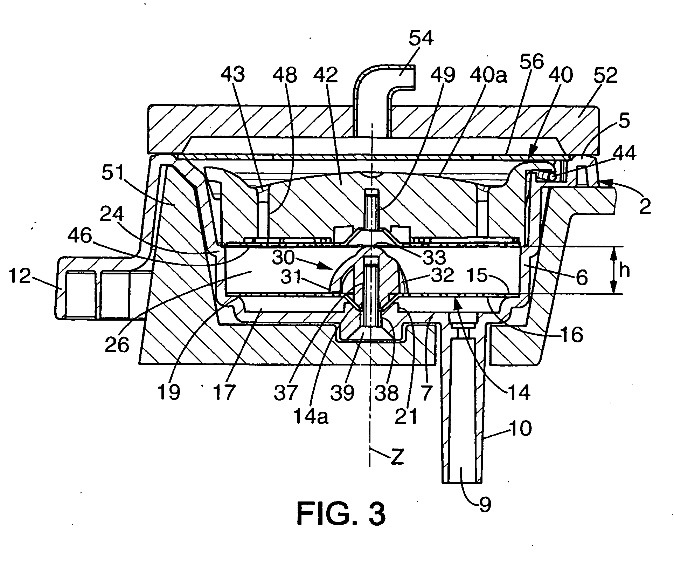

A la figure 1, est représenté en vue éclatée un porte-filtre 1 destiné à être placé dans une machine à café partiellement représentée à la figure 3 et adaptée à délivrer de l'eau chaude sous basse pression, par exemple de l'ordre de deux bars. Le porte-filtre 1, figure 1, comprend une coupelle 2 qui présente un pourtour annulaire supérieur 5 à partir duquel s'étend vers le bas une paroi annulaire 6 jusqu'à un fond 7 mieux visible sur la figure 3. Le fond 7, figure 3, présente un orifice de sortie 9 formé par une pipe 10 s'étendant verticalement.

La coupelle 2 comporte en outre une poignée 12 qui permet à l'utilisateur de placer, ou de retirer, facilement le porte-filtre 1 dans un logement prévu dans la machine à café. La paroi annulaire 6 de la coupelle 2 est globalement cylindrique et s'étend perpendiculairement au fond 7 selon un axe central Z (figure 3) qui est agencé verticalement lorsque le porte-filtre 1 est en place dans la machine à café.

Une grille perforée 14 s'étend à l'intérieur de la coupelle 2 et présente une face supérieure 15 qui est destinée à supporter de la mouture de café en vrac, et une face inférieure 16 qui s'étend parallèlement au fond 7 à faible distance de celui-ci de manière à former une chambre collectrice 17 (figure 3) dans laquelle l'infusion de café est recueillie puis dirigée vers la sortie 9.

La grille 14 est un disque en tôle mince dans lequel des perforations 18 ont été réalisées de manière connue pour permettre le passage de l'infusion tout en retenant les grains de mouture. La grille 14 qui est ici essentiellement plane, repose dans sa zone périphérique sur un premier épaulement radialement intérieur 19 formé sur la face interne de la paroi annulaire 6 de la coupelle 2, à proximité du fond 7 de celle-ci, comme visible à la figure 3. La partie centrale de la grille perforée 14 présente une déformation tronconique 14a orientée vers le bas et délimitant une ouverture centrale de la grille. Cette portion déformée 14a vient en appui contre une saillie complémentaire 21 formée sur la face interne du fond 7 de la coupelle 2.

La face interne de la paroi annulaire 6 de la coupelle 2 présente un deuxième épaulement annulaire radialement intérieur 24. Ce deuxième épaulement 24 est situé à une hauteur h (figure 3) de la face supérieure 15 de la grille perforée 14 ; cette hauteur est déterminée de manière que l'espace 26, délimité par la face supérieure 15 de la grille 14, la portion de la paroi annulaire 6 s'étendant depuis celle-ci jusqu'au deuxième épaulement 24 et le plan horizontal comprenant ce deuxième épaulement, définisse un volume donné de remplissage en mouture de café. La hauteur déterminée h est donc choisie en fonction de la section transversale de la coupelle 2 afin que la quantité de mouture de café non tassée placée dans l'espace de remplissage 26 corresponde à la quantité de mouture nécessaire pour la préparation d'un café dans le mode de réalisation représenté.

Toutefois, la hauteur de remplissage h mesurée selon l'axe central Z pourrait être plus importante, notamment pour délimiter un espace de remplissage 26 correspondant à la quantité de mouture non tassée nécessaire pour la préparation de deux cafés ou plus. On notera par ailleurs que la hauteur déterminée de remplissage h n'est pas nécessairement indiquée par un épaulement radialement interne, mais qu'elle peut être indiquée par tout moyen de repérage formé sur la face interne de la paroi annulaire 6 de la coupelle 2, comme par exemple une strie annulaire, ou encore être repérée par le sommet même de cette paroi annulaire 6 de la coupelle 2. De même, la géométrie de l'espace de remplissage pourrait être sensiblement différente d'un cylindre, notamment avec une grille perforée non plane.

Dans l'espace de remplissage 26 est disposé un organe saillant 30 présentant une base 31 coplanaire avec la face supérieure 15 de la grille 14 et une paroi latérale annulaire 32 s'étendant depuis la base 31 jusqu'à un sommet 33. L'organe saillant 30 constitue un moyen qui entrave le tassage de la mouture contenue dans l'espace de remplissage 26 par l'utilisateur avant la préparation d'une infusion. En effet, si l'utilisateur veut tasser la mouture avec une cuillère doseuse standard appelée dosette après avoir rempli le porte-filtre 1 jusqu'à la hauteur de remplissage déterminée h, la dosette vient buter contre l'organe saillant 30, et le tassage de la mouture située entre la paroi latérale 32 de l'organe saillant 30 et la paroi annulaire 6 de la coupelle 2 est évité.

Le sommet 3.3 de l'organe saillant 30 est situé à une hauteur au moins égale à la hauteur déterminée de remplissage h afin d'éviter un tassage même partiel de la mouture. Dans le mode de réalisation représenté, le sommet 33 est situé exactement au niveau de la hauteur déterminée de remplissage h, de sorte qu'il forme un moyen supplémentaire pour repérer cette hauteur, ou niveau, dans la coupelle 2.

L'organe saillant 30 est situé au centre de la face supérieure 15 de la grille perforée 14. Ainsi, avec un seul organe saillant 30, la surface annulaire de la mouture qui pourrait être tassée par une dosette, est considérablement réduite par rapport à la surface de la grille 14 en forme de disque. A cet effet, la section transversale de l'organe saillant 30 est choisie en fonction des dimensions de la coupelle 2 de manière à ce que la distance horizontale entre la paroi latérale 32 de l'organe saillant 30 et la paroi annulaire 6 de la coupelle 2 soit inférieure à la largeur d'une dosette standard qui est de l'ordre de 40 mm. Bien entendu, il est également envisageable d'utiliser plusieurs organes saillants d'entrave, en les disposant par exemple suivant une configuration circulaire.

Dans le mode de réalisation représenté, l'organe saillant 30 se présente globalement sous la forme d'un dôme. Trois échancrures 36 régulièrement espacées sont prévues dans la paroi latérale 32 de l'organe saillant 30, ainsi qu'un bossage plus prononcé au sommet 33 afin de mieux marquer la hauteur de remplissage déterminée h lorsque la mouture le recouvre quasi complètement. Cette forme en dôme de l'organe saillant 30, ainsi que toute autre forme pour laquelle la paroi latérale annulaire 32 de l'organe saillant présente une section transversale qui décroît de manière continue depuis la base 31 jusqu'au sommet 33, facilite le vidage de la mouture infusée de la coupelle. En effet, une paroi latérale évasée vers le haut pourrait retenir une partie de la mouture infusée lorsque l'utilisateur retourne le porte-filtre 1 pour le vider. Bien entendu, il est parfaitement envisageable de prévoir des moyens différents d'entrave du tassage de la mouture, par exemple sous forme d'organes s'étendant horizontalement dans un plan comprenant la hauteur déterminée de remplissage h.

Comme on le voit mieux sur la figure 3, la base 31 de l'organe saillant 30 présente une empreinte 37 réalisée sous forme d'un puits taraudé coaxial à l'axe central Z. Le fond 7 de la coupelle 2 présente un orifice central 38 qui vient en correspondance avec l'ouverture centrale de la grille 14 et le puits taraudé 37. Un moyen de fixation 39, constitué ici par une vis à tête chanfreinée, est monté à travers l'orifice central 38 du fond de la coupelle 2 et l'ouverture centrale de la grille 14. La vis 39 est vissée dans le puits taraudé 37 de l'organe saillant 30 de manière à enserrer la grille perforée 14 entre la base 31 de l'organe saillant 30 et la saillie 21 du fond 7 de la coupelle, et ainsi fixer à la fois la grille 14 et l'organe saillant 30 dans la coupelle 2. La vis 39 est donc masquée par l'organe saillant 30, de sorte que l'espace de remplissage 26 présente des parois lisses sur lesquelles il est plus facile d'éliminer la mouture infusée. Bien entendu, d'autres types de moyens de fixation de la grille perforée 14, comme par exemple des éléments d'encliquetage éventuellement venus de matière avec le fond 7 de la coupelle 2, peuvent être mis en oeuvre tout en conservant l'avantage du masquage de ces éléments d'encliquetage par l'organe saillant 30.

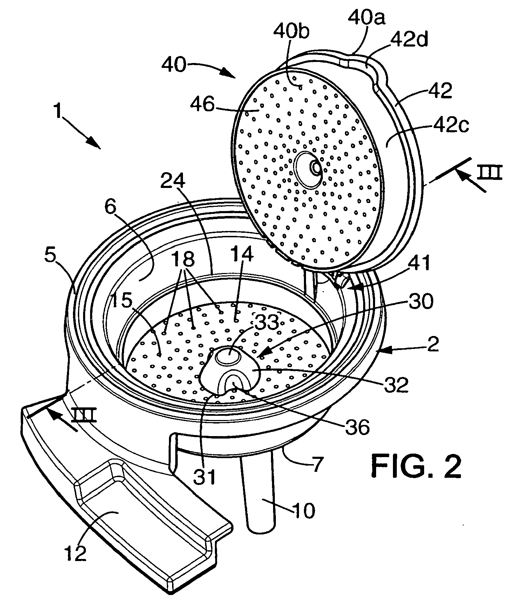

Dans le mode de réalisation représenté, le porte-filtre 1 comprend de plus un couvercle 40 monté articulé sur la coupelle 2 par l'intermédiaire d'une charnière 41. Le couvercle 40 pivote entre une position ouverte, visible à la figure 2, dans laquelle l'ouverture de la coupelle 2 délimitée par le pourtour supérieur 5 est dégagée de sorte que l'utilisateur peut remplir de mouture l'espace de remplissage 26 ou évacuer la mouture une fois infusée, et une position fermée, visible à la figure 3, pour laquelle le couvercle 40 occupe l'ouverture de la coupelle 2.

Le couvercle 40 comporte un corps principal 42 globalement en forme de disque épais dont une face forme la face supérieure 40a du couvercle. Cette face supérieure 40a du couvercle 40 présente une série d'orifices 43 disposés ici suivant une configuration circulaire.

Le couvercle 40 comporte également un élément 44 réalisé par une tige métallique coudée qui forme à la fois l'axe de pivotement de la charnière 41 et un moyen élastique qui permet de rendre stable au moins la position ouverte du couvercle 40. L'élément 44 présente des extrémités (44a, 44b) qui sont engagées dans des ouvertures (2a, 2b) de la coupelle 2 orientées l'une par rapport à l'autre selon un arc du pourtour supérieur 5. Les extrémités (44a, 44b) constituent ainsi un axe de pivotement situé à proximité de la face supérieure 40a du couvercle 40. L'élément 44 présente une partie centrale 44c qui est déformée lors du pivotement du couvercle 40 en position ouverte, de manière à exercer une force de rappel vers cette position ouverte. Ainsi, lors du remplissage du porte-filtre 1, le couvercle 40 demeure en position verticale et ne bascule pas sous l'effet de son propre poids en position fermée. Par contre, une simple pression du doigt permet de faire basculer le couvercle 40 vers sa position fermée qui peut être rendue également stable par l'élément 44.

Le couvercle 40 comporte une autre grille perforée 46 qui est en tout point identique à la grille perforée 14. Comme on le voit mieux à la figure 3, la grille 46 est montée sur la face inférieure du corps 42 formant le couvercle de sorte qu'elle forme une face inférieure plane 40b du couvercle 40. Les orifices 43 du couvercle 40 communiquent par l'intermédiaire de canaux 48 jusqu'à un évidement annulaire du corps 42. Cet évidement forme une chambre d'alimentation en eau chaude de la grille 46 qui est maintenue sur la face inférieure du corps 42 par une vis 49. Ainsi, l'eau chaude fournie par la machine à café est répartie sur la majeure partie de la surface de la mouture avant d'infuser celle-ci.

On notera que la grille perforée 46 formant la face inférieure 40b du couvercle 40 est située à une hauteur de la face supérieure 15 de la grille perforée 14 qui est égale à la hauteur déterminée de remplissage h. Ainsi, si l'utilisateur place une quantité excessive de mouture dans la coupelle 2, le couvercle 40 ne prend pas une position horizontale dans la coupelle lorsqu'il est refermé, mais reste en biais dans celle-ci, notamment du fait que de la mouture est prise dans ce cas entre la paroi annulaire 6 de la coupelle 2 et la face latérale circulaire 42c du corps 42 du couvercle.

La position en biais du couvercle indiquant un remplissage excessif en mouture est d'autant plus repérable si, comme dans le mode de réalisation représenté, la face supérieure 40a du couvercle s'étend dans le prolongement du pourtour supérieur 5 de la coupelle.

Lorsque l'utilisateur veut préparer un café, il se saisit du porte-filtre '1 par la poignée 12 et ouvre le couvercle 40. A l'aide d'une dosette standard, il remplit l'espace de remplissage 26 avec de la mouture de café en vrac jusqu'à la hauteur de remplissage prédéterminée h qui est repérée par l'épaulement radialement intérieur 24. La mouture versée dans la coupelle 2 est non tassée et peut présenter la forme d'un tas légèrement pyramidal qui peut être égalisé lors du basculement du couvercle vers sa position fermée ou à l'aide de la dosette. Mais la mouture ne peut en aucun cas être fortement tassée par la dosette en raison de la présence de l'organe saillant 30 qui entrave le tassage.

Une fois l'espace 26 rempli et le couvercle rabattu en position fermée, le porte-filtre 1 est placé dans un logement formé dans une première partie 51 d'une machine à café, comme représenté à la figure 3. Une deuxième partie 52 de la machine à café, mobile par rapport à la première partie 51, est rabattue contre le pourtour supérieur 5 de la coupelle 2, et ce de préférence de manière étanche. La deuxième partie 52 de la machine à café 50 comporte un canal d'arrivée d'eau 54 communiquant avec une douchette 56 en correspondance avec les orifices 43 de la face supérieure 40a du couvercle 40, laquelle douchette 56 constitue une sortie d'eau chaude sous pression de la machine. Etant donné que la mouture contenue dans l'espace de remplissage 26 est à l'état non tassé, la machine à café peut délivrer de l'eau chaude sous basse pression, c'est-à-dire de l'ordre de deux bars, sans risquer un blocage de l'écoulement de l'eau à travers la mouture, et donc assurer une parfaite extraction du café.

En fin d'infusion, l'utilisateur déplace la deuxième partie 52 de la machine à café pour dégager le porte-filtre 1 et retire celui-ci en saisissant la poignée 12. Ensuite, il place le couvercle 40 du porte-filtre 1 en position ouverte, par exemple en saisissant avec le doigt une échancrure 42d formée sur le bord supérieur du couvercle 40 opposé à la charnière 41, et vide le porte-filtre en retournant celui-ci au-dessus d'une poubelle, et éventuellement en le tapotant. Du fait que la mouture n'était pas préalablement tassée et que l'espace de remplissage 26 ne présente pas de partie concave, ce vidage est aisé.

Le mode de réalisation décrit ci-dessus n'est nullement limitatif. On notera notamment que l'espace de remplissage 26 et les moyens d'entrave 30 peuvent prendre des formes géométriques sensiblement différentes ; par ailleurs, la présence du couvercle 40 n'est pas indispensable pour entraver le tassage de la mouture.

Bien que le mode de réalisation ait été décrit pour de la mouture de café, il est tout à fait envisageable de mettre en oeuvre le porte-filtre selon l'invention pour des moutures destinées à préparer d'autres types de boissons, comme par exemple du chocolat.

## Revendications

1. Machine à café comportant un générateur d'eau chaude sous basse pression, de l'ordre de deux bars, et une chambre d'infusion comportant un porte-filtre (1) destiné à recevoir une dose de mouture à infuser, ledit porte-filtre comprenant une coupelle (2) présentant un fond (7) muni d'au moins un orifice de sortie (9), une paroi annulaire (6) s'étendant depuis le fond jusqu'à un pourtour supérieur (5) définissant une ouverture destinée à être montée sur une sortie d'eau chaude de la machine, et une grille perforée (14) s'étendant entre la paroi annulaire (6) de la coupelle (2) et présentant une face supérieure (15) destinée à supporter la mouture sur une hauteur déterminée (h) de remplissage en mouture non tassée, ladite coupelle (2) du porte-filtre comportant des moyens (30) pour entraver le tassage de la mouture par l'utilisateur avant la préparation d'une infusion, **caractérisée en ce que** les moyens d'entrave comportent au moins un organe saillant (30) s'étendant depuis une base (31) coplanaire avec la face supérieure (15) de la grille (14) jusqu'à un sommet (33) situé à une hauteur au moins approximativement égale à la hauteur déterminée de remplissage (h).

2. Machine à café selon la revendication 1, dans laquelle l'organe saillant (30) est fixé au centre de la grille perforée (14).

3. Machine à café selon la revendication 1 ou 2, dans laquelle le sommet (33) de l'organe saillant (30) est situé à une hauteur sensiblement égale à la hauteur déterminée de remplissage (h).

4. Machine à café selon l'une quelconque des revendications 1 à 3, dans laquelle l'organe saillant (30) présente une paroi latérale annulaire (32) s'étendant de la base (31) au sommet (33), ladite paroi latérale (32) de l'organe saillant présentant une section transversale qui décroît d'une manière continue depuis la base (31) jusqu'au sommet (33).

5. Machine à café selon la revendication 4, dans laquelle la distance horizontale entre la paroi latérale (32) de l'organe saillant (30) et la paroi annulaire (6) de la coupelle (2) est inférieure à la largeur d'une cuillère doseuse standard sur la majeure partie de la hauteur de l'organe saillant (30).

6. Machine à café selon l'une quelconque des revendications 1 à 5, dans laquelle l'organe saillant (30) présente globalement la forme d'un dôme.

7. Machine à café selon l'une quelconque des revendications 1 à 6, dans laquelle la base de l'organe saillant (30) présente une empreinte (37) adaptée à coopérer avec un moyen de fixation (39), ledit moyen de fixation (39) étant monté à travers la grille perforée (14) de manière à maintenir celle-ci dans la coupelle (2) à l'aide de l'organe saillant (30).

8. Machine à café selon l'une quelconque des revendications précédentes, dans laquelle un couvercle (40) est monté articulé sur la coupelle (2) entre une position ouverte dans laquelle il dégage l'ouverture de la coupelle pour le remplissage de la mouture et une position fermée pour laquelle il est agencé dans l'ouverture de la coupelle, ledit couvercle (40) présentant une face inférieure perforée (40b) et une face supérieure (40a) munie d'orifices (43) communiquant avec ladite face inférieure perforée par des canaux (48), ladite face inférieure (40b) du couvercle (40) en position fermée s'étendant selon un plan passant par la hauteur déterminée de remplissage (h).

## Claims

1. Coffee machine comprising a hot-water generator at low pressure, aground two bar, and an infusion chamber comprising a filter holder (1) intended to receive a dose of ground coffee to be infused, the said filter holder comprising a cup (2) having a bottom (7) provided with at least one outlet orifice (9), an annular wall (6) extending from the bottom as far as an upper circumference (5) defining an opening intended to be mounted on a hot-water outlet of the machine, and a perforated grille (14) extending between the annular wall (6) of the cup (2) and having a top face (15) intended to support the ground coffee over a given height (h) for filling with untamped ground coffee, the said cup (2) of the filter holder comprising means (30) for hampering the tamping of the ground coffee by the user before the preparation of an infusion, **characterised in that** the hampering means comprise at least one projecting member (30) extending from a base (31) coplanar with the top face (15) of the grille (14) as far as a top (33) situated at a height at least approximately equal to the given filling height (h).

2. Coffee machine according to claim 1, in which the projecting member (30) is fixed to the centre of the perforated grille (14).

3. Coffee machine according to claim 1 or 2, in which the top (33) of the projecting member (30) is situated at a height substantially equal to the given filling height (h).

4. Coffee machine according to any one of claims 1 to 3, in which the projecting member (30) has an annular lateral wall (32) extending from the base (31) to the top (33), the said lateral wall (32) of the projecting member having a transverse section that decreases continuously from the base (31) to the top (33).

5. Coffee machine according to claim 4, in which the horizontal distance between the lateral wall (32) of the projecting member (30) and the annular wall (6) of the cup (2) is less than the width of a standard measuring spoon over the major part of the height of the projecting member (30).

6. Coffee machine according to any one of claims 1 to 5, in which the projecting member (30) has roughly the shape of a dome.

7. Coffee machine according to any one of claims 1 to 6, in which the base of the projecting member (30) has an indentation (37) adapted to cooperate with a fixing means (39), the said fixing means (39) being mounted across the perforated grille (14) so as to hold the latter in the cup (2) by means of the projecting member (30).

8. Coffee machine according to any one of the preceding claims, in which a lid (40) is mounted articulated on the cup (2) between an open position in which it leaves clear the opening of the cup for filling the ground coffee and a closed position in which it is arranged in the opening of the cup, the said lid (40) having a perforated bottom face (40b) and a top face (40a) provided with orifices (43) communicating with the said perforated bottom face through channels (48), the said bottom face (40b) of the lid (40) in the closed position extending along a plane passing through the given filling height (h).

## Patentansprüche

1. Kaffeemaschine mit einer Vorrichtung zum Erzeugen von Heißwasser bei niedrigem Druck, in der Größenordnung von 2 bar, und einer Aufgusskammer, die eine Filtertür (1) aufweist, die zum Aufnehmen einer Aufgussdosis bestimmt ist, wobei die Filtertür eine Schale (2) umfasst, welche einen Boden mit wenigstens einer Ausgangsöffnung (9) aufweist, sowie eine ringförmige Wand (6), der sich von dem Boden bis zu einer oberen Außenlinie (5) erstreckt, die eine Öffnung definiert, welche zur Anbringung an einen Heißwasserausgang der Maschine bestimmt ist, und einem perforierten Gitter (14), das sich zwischen der ringförmigen Wand (6) der Schale (2) erstreckt und eine Oberseite (15) aufweist, die zum Halten des Aufgusses auf einer vorgegebenen Füllhöhe (h) für nicht gepressten Aufguss bestimmt ist, wobei die Schale (2) der Filtertüre Mittel (30) zum Verhindern des Zusammendrückens des Aufgusses durch den Benutzer vor der Zubereitung eines Aufgusses aufweist, **dadurch gekennzeichnet, dass** die Mittel zum Verhindern wenigstens ein vorspringendes Element (30) aufweisen, das sich von einer mit der Oberseite (15) des Gitters (14) koplanaren Basis (31) bis zu einem Scheitel (33) erstreckt, der auf einer Höhe liegt, die im Wesentlichen ungefähr gleich der vorgegebenen Füllhöhe (h) ist.

2. Kaffeemaschine nach Anspruch 1, wobei das vorspringende Element (30) im Zentrum des perforierten Gittes (14) befestigt ist.

3. Kaffeemaschine nach Anspruch 1 oder 2, wobei der Scheitel (33) des vorspringenden Elementes (30) auf einer Höhe liegt, die im Wesentlichen gleich der vorgegebenen Füllhöhe (h) ist.

4. Kaffeemaschine nach einem der Ansprüche 1 bis 3, wobei das vorspringende Element (30) eine ringförmige Seitenwand (32) aufweist, die sich von der Basis (31) zum Scheitel (33) erstreckt, wobei die Seitenwand (32) des vorspringenden Elementes einen Querschnitt hat, der kontinuierlich von der Basis (31) bis zum Scheitel (33) abnimmt.

5. Kaffeemaschine nach Anspruch 4, wobei der horizontale Abstand zwischen der Seitenwand (32) des vorspringenden Elementes (30) und der ringförmigen Wand (6) der Schale (2) über den größten Teil der Höhe des vorspringenden Elementes (30) kleiner ist als die Größe eines Standard-Dosierlöffels.

6. Kaffeemaschine nach einem der Ansprüche 1 bis 5, wobei das vorspringende Element (30) im Wesentlichen die Form einer Kuppel hat.

7. Kaffeemaschine nach einem der Ansprüche 1 bis 6, wobei die Basis des vorspringenden Elementes (30) einen Grundriss (37) hat, der mit einer Befestigungseinrichtung (39) zusammenwirken kann, wobei die Befestigungseinrichtung (39) über dem perforierten Gitter (14) so angebracht ist, dass dieses mit Hilfe des vorspringenden Elementes (30) in der Schale (2) gehalten wird.

8. Kaffeemaschine nach einem der vorangehenden Ansprüche, wobei eine Abdeckung (40) an der Schale (2) gelenkig zwischen einer Öffnungsposition, in der sie die Öffnung der Schale freigibt, um diese mit dem Aufguss zu füllen, und einer Schließposition, in der sie mit der Öffnung der Schale verbunden ist, angebracht ist, wobei die Abdeckung (40) eine perforierte Unterseite (40b) und eine Oberseite (40a) mit Öffnungen (43), welche mit der perforierten Unterseite über Kanäle (48) verbunden sind, aufweist, wobei die Unterseite (40b) der Abdeckung (40) sich in geschlossener Position entlang einer Ebene erstreckt, die durch die vorgegebene Füllhöhe (h) verläuft.
